# EUROPÄISCHE PATENTSCHRIFT

(11) **EP 4 254 355 B1**
(45) Veröffentlichungstag und Bekanntmachung des Hinweises auf die Patenterteilung: **10.12.2025**
(21) Anmeldenummer: 22165870.1
(22) Anmeldetag: 31.03.2022
(51) Int. Cl.: G06V 10/56, G06V 20/56, G08G 1/16

(54) **VERFAHREN ZUM FREIGEBEN EINES ASSISTIERTEN FAHRSTREIFENWECHSELS FÜR EIN KRAFTFAHRZEUG**
METHOD FOR RELEASING AN ASSISTED LANE CHANGE FOR A MOTOR VEHICLE
PROCÉDÉ D'AUTORISATION D'UN CHANGEMENT DE VOIE POUR UN VÉHICULE AUTOMOBILE

(43) Veröffentlichungstag der Anmeldung: 04.10.2023
(73) Patentinhaber: VOLKSWAGEN AG, 38440 Wolfsburg (DE)
(72) Erfinder: Münning, Daniel, 38124 Braunschweig (DE); Saust, Falko, 38165 Lehre (DE)

(56) Entgegenhaltungen:
- DE-A1- 102018 114 912
- N L ET AL: "A robust multi color lane marking detection approach for Indian scenario", INTERNATIONAL JOURNAL OF ADVANCED COMPUTER SCIENCE & APPLICATIONS, 30 May 2011 (2011-05-30), West Yorkshire, XP055958524, Retrieved from the Internet <URL:https://thesai.org/Downloads/Volume2No5/Paper%2012-A%20robust%20multi%20color%20lane%20marking%20detection%20approach%20for%20Indian%20scenario.pdf> [retrieved on 20220907], DOI: 10.14569/IJACSA.2011.020512

## Beschreibung

Die Erfindung betrifft ein Verfahren zum Freigeben eines zumindest assistierten Fahrstreifenwechsels für ein Kraftfahrzeug. Zudem betrifft die Erfindung ein Kraftfahrzeug zum Durchführen eines derartigen Verfahrens.

Ein Kraftfahrzeug kann ein Fahrerassistenzsystem aufweisen, das beispielsweise dazu ausgebildet ist, zumindest eine Querführung des Kraftfahrzeugs, das heißt dessen Lenkung, zu übernehmen. Das Fahrerassistenzsystem kann beispielsweise dazu ausgebildet sein, das Kraftfahrzeug auf einem Fahrstreifen, der quer zu einer Fahrtrichtung des Kraftfahrzeugs von zwei Fahrstreifenmarkierungen begrenzt ist, zu halten. Das Fahrerassistenzsystem kann ferner dazu ausgebildet sein, zumindest assistiert einen Fahrstreifenwechsel zwischen mindestens zwei Fahrstreifen einer Straße durchzuführen, zum Beispiel immer dann, wenn ein Fahrer des Kraftfahrzeugs ein Blinklicht des Kraftfahrzeugs aktiviert und/oder eine andere Freigabebedingung für den assistierten Fahrstreifenwechsel erfüllt ist. Die andere Freigabebedingung kann beispielsweise voraussetzen, dass auf der Straße Fahrstreifenmarkierungen zwischen den Fahrstreifen angeordnet und diese mittels einer Sensoreinrichtung des Kraftfahrzeugs erfassbar sind.

Die DE 10 2011 078 685 A1 zeigt ein Straßenseitenerfassungssystem für ein Kraftfahrzeug, um eine Straßenseite einer vom Kraftfahrzeug befahrenen Straße zu erfassen. In diesem Zusammenhang kann beispielsweise ein Abstand zu einem Objekt an der Straßenseite und/oder eine Reflexionsintensität des Objekts erfasst werden.

Die EP 3 617 937 A1 zeigt eine Bildverarbeitungsvorrichtung, um einen Abstand zu einem Objekt zu bestimmen. Hierbei kann ein Abstand zwischen ersten und zweiten Referenzlinien des Objekts bestimmt werden. Die Referenzlinien können Straßenmarkierungen sein.

Die CN 110570347 A zeigt ein Verfahren zum Graufärben eines Farbbildes zur Fahrspurdetektion, um die Fahrspurerkennung hinsichtlich ihrer Genauigkeit zu verbessern.

Die gattungsgebende DE 10 2018 114 912 A1 zeigt ein Verfahren zum Klassifizieren einer Farbe einer Fahrbahnmarkierung einer Fahrbahn in einer Umgebung eines Kraftfahrzeugs mittels eines Fahrerassistenzsystems des Kraftfahrzeugs. Mittels einer Erfassungseinrichtung des Fahrerassistenzsystems wird ein Bild der Umgebung mit der Fahrbahnmarkierung erfasst und bezüglich der Farbe der Fahrbahnmarkierung zum Klassifizieren mittels einer elektronischen Recheneinrichtung des Fahrerassistenzsystems ausgewertet. Mittels eines statistischen Fahrbahnmarkierungsbestimmungsmodells wird durch Auswertung eines Farbwerts der erfassten Fahrbahnmarkierung die Farbe der Fahrbahnmarkierung klassifiziert und ein Konfidenzwert in Abhängigkeit des Fahrbahnmarkierungsbestimmungsmodells für die klassifizierte Farbe der Fahrbahnmarkierung ausgegeben.

Die Veröffentlichung "A robust multi color lane marking detection approach for Indian scenario" von L. N. P. Boggavarapu et al. (International Journal of Advanced Computer Science and Applications, Vol. 2, No. 5, 2011, Seiten 71 - 74) zeigt vergleichende experimentelle Ergebnisse eines vorgeschlagenen Ansatzes zur Fahrstreifenerkennung.

Es ist die Aufgabe der Erfindung, eine Lösung bereitzustellen, mittels derer zuverlässig eine Fahrstreifenmarkierung erkannt und ausgewertet werden kann.

Die Aufgabe wird durch den Gegenstand des unabhängigen Patentanspruchs und des nebengeordneten Patentanspruchs gelöst.

Ein erstes Ausführungsbeispiel der Erfindung betrifft ein Verfahren zum Freigeben eines zumindest assistierten Fahrstreifenwechsels für ein Kraftfahrzeug gemäß Anspruch 1. Der Erfindung liegt die Erkenntnis zugrunde, dass oftmals eine Farbe einer Fahrstreifenmarkierung ein regulatorisches Element ist, das als Freigabebedingung für den zumindest assistierten Fahrstreifenwechsel herangezogen werden kann, insbesondere falls an die Farbe der Fahrstreifenmarkierung zumindest eine vorgegebene Anforderung gestellt ist. Mit anderen Worten kann es vorgegeben sein, dass beispielsweise ein assistierter Fahrstreifenwechsel untersagt und somit unzulässig ist, wenn eine Farbe der Fahrstreifenmarkierung nicht einer voreingestellten Farbe entspricht. Es kann also beispielsweise vorgegeben sein, dass nur bei einer weißen Fahrstreifenmarkierung ein Fahrstreifenwechsel, das heißt ein Überfahren der weißen Fahrstreifenmarkierung zum Erreichen des Fahrstreifens, zu dem gewechselt werden soll, zulässig ist. Demgegenüber kann beispielsweise ein assistierter Fahrstreifenwechsel bei einer andersfarbigen Fahrstreifenmarkierung untersagt sein. Der Grund hierfür kann sein, dass beispielsweise eine am Ort des gewünschten Fahrstreifenwechsels geltende Verkehrsregeln die Farbe der Fahrstreifenmarkierung, bei der der Fahrstreifenwechsel erlaubt ist, fest vorgibt.

Es ist ferner bekannt, dass typischerweise beim Auswerten von beispielsweise Kameradaten, die die Fahrstreifenmarkierung in der Umgebung des Kraftfahrzeugs beschreiben, lediglich eine Form der Fahrstreifenmarkierung erkannt und/oder ein Fahrstreifenmarkierungstyp ausgewertet wird. Es kann also beispielsweise festgestellt werden, dass die Fahrstreifenmarkierung eine Linie in Form einer Klothoiden und/oder vom Fahrstreifenmarkierungstyp her eine durchgezogene oder gestrichelte Linie ist. Eine derartige Auswertung der Kameradaten basiert typischerweise auf Methoden des maschinellen Lernens, zum Beispiel auf einem künstlichen neuronalen Netzwerk. Auf Basis der Form und/oder des Fahrstreifenmarkierungstyps kann zumindest eine Freigabebedingung für einen möglichen assistierten Fahrstreifenwechsel überprüft werden. Es ist jedoch besonders sinnvoll, hierbei zusätzlich oder alternativ die Farbe der Fahrstreifenmarkierung zu berücksichtigen, da diese gegebenenfalls einen Einfluss darauf hat, ob der Fahrstreifenwechsel überhaupt erlaubt ist oder nicht.

Die Farbe der Fahrstreifenmarkierung, die ermittelt wird, kann jedoch, beispielsweise je nach Situation oder Umgebungslicht, falsch erfasst werden. Beispielsweise kann eine eigentlich weiße Fahrstreifenmarkierung bei aktiviertem Blinklicht des Kraftfahrzeugs einen Geld- oder Orangestich und somit eine veränderte Farbe aufweisen. Es ist daher sinnvoll, eine farblich differenzierte Freigabe des assistierten Fahrstreifenwechsels bereitzustellen.

Das erfindungsgemäße Verfahren weist folgende Schritte auf: Es erfolgt ein Ermitteln einer Farbinformation, die eine Farbe einer Fahrstreifenmarkierung eines Fahrstreifens beschreibt, auf dem das Kraftfahrzeug fährt. Das Ermitteln der Farbinformation erfolgt durch Auswerten von Sensordaten, die die Farbe der Fahrstreifenmarkierung beschreiben. Die Sensordaten können beispielsweise Kameradaten sein, die eine Umgebung des Kraftfahrzeugs, insbesondere in einem Frontbereich des Kraftfahrzeugs, beschreiben. Die Kameradaten können mittels einer Kamera des Kraftfahrzeugs, zum Beispiel einer Frontkamera, einer Seitenkamera und/oder einer 360-Grad-Kamera, erfasst werden. Alternativ oder zusätzlich dazu können die Kameradaten mittels einer Heckkamera erfasst werden. Das Ermitteln der Farbinformation kann durch Auswerten von Bildpixeln der Kameradaten erfolgen, die als der Fahrstreifenmarkierung zugehörig klassifiziert und/oder segmentiert wurden. Das Ermitteln der Farbinformation kann auf Methoden der Bildverarbeitung und/oder des maschinellen Lernens, beispielsweise auf einem neuronalen Netzwerk, basieren. Die Fahrstreifenmarkierung ist beispielsweise eine Mittelstreifenmarkierung, die eine Grenze zwischen zwei benachbarten Fahrstreifen markiert.

Die Fahrstreifenmarkierung ist beispielsweise als eine Fahruntergrund- oder Fahrbodenmarkierung ausgebildet, das heißt als beispielsweise weißer, orangefarbener oder andersfarbiger Streifen auf einer Oberfläche des Fahruntergrunds beziehungsweise des Fahrbodens.

Ein weiterer Verfahrensschritt sieht ein Ermitteln einer Farbanteilsinformation vor. Die Farbanteilsinformation beschreibt einen Anteil einer Fahrstrecke des Kraftfahrzeugs, in dem die Fahrstreifenmarkierung eine voreingestellte Farbe aufweist. Die Farbanteilsinformation wird durch Auswerten einer Fahrstreckeninformation, die die vom Kraftfahrzeug abgefahrene Fahrstrecke beschreibt, ermittelt. Außerdem wird die Farbanteilsinformation durch Auswerten der ermittelten Farbinformation ermittelt. Es wird also letztendlich geprüft, ob beispielsweise innerhalb der letzten 500 Meter Fahrstrecke die Fahrstreifenmarkierung die voreingestellte Farbe aufgewiesen hat und, wenn ja, zu welchem Anteil von der gesamten betrachteten Fahrstrecke. Hierbei kann beispielsweise bestimmt werden, dass die Farbanteilsinformation bei 98 Prozent liegt, das heißt die Fahrstreifenmarkierung auf der betrachteten Fahrstrecke von zum Beispiel 500 Meter zu 98 Prozent die voreingestellte Farbe aufgewiesen hat und somit nur zu 2 Prozent zum Beispiel eine von der voreingestellte Farbe abweichende Farbe. Die Farbanteilsinformation wird beispielsweise als prozentualer Wert angegeben. Alternativ oder zusätzlich dazu kann die Farbanteilsinformation die Fahrstrecke in beispielsweise Meter beschreiben, für die die Fahrstreifenmarkierung die voreingestellte Farbe aufgewiesen hat. Die voreingestellte Farbe ist bevorzugt weiß, kann jedoch alternativ dazu zum Beispiel orangefarben oder andersfarbig sein. Die Fahrstreckeninformation kann beispielsweise für die letzten 500 Meter oder eine Fahrstrecke mit einer alternativen Länge vorgegeben sein.

Alternativ oder zusätzlich dazu beschreibt die Farbanteilsinformation einen Anteil einer Fahrzeit des Kraftfahrzeugs, in der die Fahrstreifenmarkierung die voreingestellte Farbe aufweist. Die Farbanteilsinformation wird dann durch Auswerten einer Fahrzeitinformation, die die Fahrzeit des Kraftfahrzeugs beschreibt, und durch Auswerten der ermittelten Farbinformation ermittelt. Der Anteil kann also zeitabhängig sein, sodass beispielsweise angegeben wird, für welchen Prozentanteil an der gesamten bisherigen Fahrzeit die Fahrstreifenmarkierung die voreingestellte Farbe aufgewiesen hat. Anstelle der gesamten bisherigen Fahrzeit kann ein zeitlich begrenztes Zeitfenster festgelegt sein, das beispielsweise die letzten 5 Sekunden umfasst, ausgehend von einem aktuellen Zeitpunkt betrachtet.

Es erfolgt dann eine Überprüfen der ermittelten Farbanteilsinformation. Falls die ermittelte Farbanteilsinformation größer als ein Farbanteilsinformationsgrenzwert ist, erfolgt ein Bereitstellen einer Freigabeinformation. Die Freigabeinformation beschreibt, dass der zumindest assistierte Fahrstreifenwechsel freigegeben ist. Es kann beispielsweise ein Farbanteilsinformationsgrenzwert von 90 Prozent vorgegeben sein, sodass beispielsweise im oben genannten Beispiel, mit der Farbanteilsinformation von 98 Prozent das Überprüfen erfolgreich ist, sodass die Freigabeinformation bereitgestellt wird. Die Freigabeinformation kann alternativ als Freigabesignal verstanden werden, das beispielsweise im Kraftfahrzeug signalisiert, dass der zumindest assistierte Fahrstreifenwechsel erlaubt ist, das heißt, zumindest aktuell prinzipiell möglich ist.

Falls die ermittelte Farbanteilsinformation kleiner als oder gleich dem Farbanteilsinformationsgrenzwert ist, erfolgt ein Bereitstellen einer Untersagungsinformation. Die Untersagungsinformation beschreibt, dass das Freigeben des zumindest assistierten Fahrstreifenwechsels untersagt ist. Mit anderen Worten kann bei bereitgestellter Untersagungsinformation kein zumindest assistierter Fahrstreifenwechsel durchgeführt werden. Bei einer Farbanteilsinformation von zum Beispiel unter oder gleich 90 Prozent kann es also der Fall sein, kein assistierter Fahrstreifenwechsel möglich ist, da die Untersagungsinformation bereitgestellt ist.

Es kann also mit geringem Aufwand und schnell durch Auswerten der Sensordaten überprüft werden, ob die Farbe der Fahrstreifenmarkierung es prinzipiell zulässt, dass der assistierte Fahrstreifenwechsel durchgeführt wird oder nicht. Es wird also zuverlässig die Fahrstreifenmarkierung erkannt und ausgewertet.

Der zumindest assistierte Fahrstreifenwechsel ist ein Fahrstreifenwechsel, der zum Beispiel bei einem aktivierten Fahrerassistenzsystem, wie beispielsweise einem Spurwechselassistenten, vorgesehen ist. Ferner kann die Freigabeinformation beziehungsweise Untersagungsinformation auf einen zumindest teilautomatischen und insbesondere einen vollautomatischen Fahrstreifenwechsel Einfluss haben. Das Verfahren kann also ebenfalls dafür eingesetzt werden, um festzustellen, ob ein zumindest teilautomatischer und insbesondere vollautomatischer Fahrstreifenwechsel durchgeführt werden kann.

Die beschriebenen Verfahrensschritte, das heißt, das Ermitteln der Farbinformation und der Farbanteilsinformation, das Überprüfen, wie sich die Farbanteilsinformation zum Farbanteilsinformationsgrenzwert verhält, sowie das Bereitstellen der Freigabeinformation beziehungsweise der Untersagungsinformation können mittels einer Steuervorrichtung des Kraftfahrzeugs durchgeführt werden. Die Steuervorrichtung kann eine zentrale Steuervorrichtung des Kraftfahrzeugs sein, die beispielsweise dazu ausgebildet ist, das Fahrerassistenzsystem und/oder die teilautomatische, insbesondere die vollautomatische, Fahrfunktion durchzuführen, das heißt, die Längsführung des Kraftfahrzeugs zumindest assistiert anzusteuern. Ferner können einzelne Verfahrensschritte, wie beispielsweise das Ermitteln der Farbinformation, mittels einer Steuereinrichtung einer Sensoreinrichtung des Kraftfahrzeugs erfolgen, die die Sensordaten bereitstellt. Die Sensoreinrichtung kann die Kamera des Kraftfahrzeugs sein.

Es kann in einem weiteren Verfahrensschritt vorgesehen sein, dass, falls die Freigabeinformation bereitgestellt wurde, der zumindest assistierte Fahrstreifenwechsel durchgeführt wird. Hierfür kann mittels der Steuervorrichtung des Kraftfahrzeugs zumindest die Querführung des Kraftfahrzeugs angesteuert werden.

Es kann vorgesehen sein, dass das Verfahren nur dann durchgeführt wird, wenn festgestellt wird, dass sich das Kraftfahrzeug auf einer Fahrt auf einer Schnellstraße befindet. Es kann beispielsweise vor dem Ermitteln der Farbinformation überprüft werden, ob sich das Kraftfahrzeug auf einer Schnellstraße befindet oder nicht, wobei die weiteren Verfahrensschritte nur dann durchgeführt werden, wenn sich das Kraftfahrzeug auf der Schnellstraße befindet. Es kann also vorgesehen sein, dass der zumindest assistierte Fahrstreifenwechsel nur für einen bestimmten Straßentyp vorgesehen ist, wie beispielsweise die Schnellstraße.

Ein Ausführungsbeispiel sieht vor, dass die Fahrstrecke, für die die Farbanteilsinformation ermittelt wird, eine Fahrstreckenlänge aufweist, die größer als eine Mindestfahrstreckenlänge ist. Es kann also vorgesehen sein, dass sich die Farbanteilsinformation stets auf einen Abschnitt der Fahrstrecke bezieht, die sich zumindest über die Mindestfahrstreckenlänge erstreckt. Die Mindestfahrstreckenlänge kann beispielsweise 10 Meter, 20 Meter, 50 Meter, 100 Meter, 200 Meter, 300 Meter, 400 Meter, 500 Meter, 700 Meter, 1 Kilometer, 2 Kilometer, 5 Kilometer, insbesondere 10 Kilometer lang sein kann. Die Mindestfahrstreckenlänge kann einen Wert zwischen den genannten Werten betragen. Falls die Fahrstreckeninformation nur für eine Fahrstreckenlänge vorliegt, die kleiner als oder gleich der Mindestfahrstreckenlänge ist, kann vorgesehen sein, dass keine Farbanteilsinformation ermittelt wird, da beispielsweise die auszuwertende Fahrstrecke hinsichtlich ihrer Fahrstreckenlänge als zu klein bewertet wird, um beispielsweise als ausreichend aussagekräftig angesehen zu werden. Es kann hierdurch verhindert werden, dass kleine Fahrstrecken von beispielsweise weniger als 10 Meter Länge berücksichtigt werden, zu denen nur sehr lokal die Farbanteilsinformation ermittelt werden kann. Je länger die Mindestfahrstreckenlänge ist, desto geringer wirken sich kurzzeitige oder nur lokale Veränderungen der Farbe der Fahrstreifenmarkierung aus, falls diese von der voreingestellten Farbe abweicht. Durch die Vorgabe der Mindestfahrstreckenlänge wird das Verfahren daher besonders robust.

Alternativ oder zusätzlich dazu kann es vorgesehen sein, dass die Fahrzeit, für die die Farbanteilsinformation ermittelt wird, eine Fahrzeitdauer aufweist, die größer als eine Mindestfahrzeitdauer ist. Es kann also vorgesehen sein, dass sich die Farbanteilsinformation stets auf einen Abschnitt der Fahrzeit bezieht, die sich zumindest über die Mindestfahrzeitdauer erstreckt. Die Mindestfahrzeitdauer kann beispielsweise ausgehend vom aktuellen Zeitpunkt die letzten 5 Sekunden, die letzten 10 Sekunden, die letzten 30 Sekunden, die letzte Minute, die letzten 3 Minuten, die letzten 5 Minuten, die letzten 10 Minuten, die letzten 15 Minuten, die letzte halbe Stunde, oder insbesondere die letzte Stunde umfassen. Die Mindestfahrzeitdauer kann einen Wert zwischen den genannten Werten betragen. Falls die Fahrstreckeninformation nur für eine Fahrzeit vorliegt, die kleiner als oder gleich der Mindestfahrzeitdauer ist, kann vorgesehen sein, dass keine Farbanteilsinformation ermittelt wird, da beispielsweise die auszuwertende Fahrzeit hinsichtlich ihrer Fahrzeitdauer als zu klein bewertet wird, um beispielsweise als ausreichend aussagekräftig angesehen zu werden. Es ergibt sich hierdurch ebenfalls ein besonders robustes Verfahren.

Ein zusätzliches Ausführungsbeispiel sieht vor, dass überprüft wird, ob gemäß der ermittelten Farbinformation ein Farbwechsel zwischen der voreingestellten Farbe und einer davon abweichenden anderen Farbe erfolgt ist. Es wird also überprüft, ob beispielsweise zumindest lokal die Farbe der Fahrstreifenmarkierung von beispielsweise weiß zu orangefarben oder einer davon abweichenden Farbe oder zwischen zwei von diesen beispielhaft genannten Farben abweichenden Farben gewechselt hat. Falls der Farbwechsel zur anderen Farbe erfolgt ist, wird eine Zeitdauerinformation ermittelt. Die Zeitdauerinformation beschreibt, für welche Zeitdauer die Farbinformation die andere Farbe beschreibt. Die Zeitdauerinformation kann beispielsweise in Sekunden und/oder in Erfassungstakten einer Sensoreinrichtung, wie beispielsweise der Kamera des Kraftfahrzeugs, angegeben werden. Ein Erfassungstakt kann beispielsweise 20 Millisekunden andauern. Es kann also beispielsweise festgestellt werden, dass für beispielsweise 5 Sekunden die ermittelte Farbinformation auf eine orangefarbene Fahrstreifenmarkierung hindeutet und nicht wie beispielsweise zuvor auf eine weiße Fahrstreifenmarkierung.

Falls die ermittelte Zeitdauerinformation kleiner als ein Zeitdauergrenzwert ist, wird beim Ermitteln der Farbanteilsinformation angenommen, dass in der Zeitdauer die Fahrstreifenmarkierung die voreingestellte Farbe aufgewiesen hat. Wird also beispielsweise der Zeitdauergrenzwert auf 3 Sekunden festgelegt, wobei die Zeitdauerinformation lediglich auf eine Sekunde mit orangefarbener Fahrstreifenmarkierung und somit mit einer Fahrstreifenmarkierung anderer Farbe als die voreingestellte Farbe hindeutet, diese kurze Zeitdauer der anderen Farbe ignoriert und weiterhin davon ausgegangen, dass die Fahrstreifenmarkierung die voreingestellte Farbe, das heißt in diesem Beispiel Weiß, aufgewiesen hat. Es wird somit verhindert, dass es bei einem beispielsweise nur kurzfristigen Wechsel der Farbe der Fahrstreifenmarkierung zu einem Bereitstellen der Untersagungsinformation kommt. Letztendlich wird hierdurch ein Filter bereitgestellt, der bei nur kurzzeitigen Farbwechseln, die mithilfe des Zeitdauergrenzwertes eingeschätzt werden können, kein Bereitstellen der Untersagungsinformation erfolgt, sondern weiterhin die Freigabeinformation bereitgestellt wird. Hierdurch kann verhindert werden, dass beispielsweise nur temporäre Beleuchtungsänderungen oder beispielsweise ein Erfassen eines orangefarbenen Blinklichts eines weiteren Verkehrsteilnehmers oder des Kraftfahrzeugs selbst, das zu einer orangefarbenen Färbung der eigentlich weißen Fahrstreifenmarkierung führt, bewirkt, dass der assistierte Fahrstreifenwechsel untersagt wird. Hierdurch wird kann die Robustheit des Verfahrens erhöht werden.

Ein weiteres Ausführungsbeispiel sieht vor, dass eine Farbwechselanzahlinformation ermittelt wird, die eine Anzahl an Farbwechseln zwischen der voreingestellten Farbe und einer davon abweichenden anderen Farbe beschreibt. Es kann also beispielsweise festgestellt werden, wie oft pro Sekunde ein derartiger Farbwechsel beobachtet wird. Es wird daraufhin überprüft, ob die ermittelte Farbwechselanzahlinformation kleiner als ein Farbwechselanzahlgrenzwert ist. Nur falls dies der Fall ist, wird die Freigabeinformation bereitgestellt. Hierdurch kann beispielsweise festgestellt werden, ob eine Unsicherheit hinsichtlich der Farberfassung mittels beispielsweise der Sensoreinrichtung, das heißt der Kamera, gegeben ist, da vermehrte Farbwechsel in kurzer Zeit, aufgetreten sind. Falls die Farbwechselanzahlinformation größer oder gleich dem Farbwechselanzahlgrenzwert ist, wird die Untersagungsinformation bereitgestellt. Denn dies kann auf eine zumindest eingeschränkte Funktionsfähigkeit und/oder einen Defekt und/oder eine Störung der Sensoreinrichtung hindeuten.

Es ist in einem zusätzlichen Ausführungsbeispiel vorgesehen, dass die Farbwechselanzahlinformation die Anzahl der Farbwechsel zeitabhängig und/oder wegabhängig beschreibt. Es kann also die Anzahl der Farbwechsel pro Zeit, beispielsweise pro Sekunde oder Minute, und/oder die Farbwechsel pro Weg und/oder Strecke, das heißt beispielsweise pro Meter oder Kilometer, angegeben werden. Hierdurch kann besonders präzise ein jeweiliger Farbwechselanzahlgrenzwert bereitgestellt werden, der entweder ebenfalls zeitabhängig und/oder wegabhängig definiert sein kann. Hierdurch wird die Genauigkeit der Überprüfung der Farbwechselanzahlinformation relativ zum Farbwechselanzahlgrenzwert besonders zuverlässig.

Des Weiteren sieht es ein Ausführungsbeispiel vor, dass die ermittelte Farbinformation einem Farbton der Farbe beschreibt. Der Farbton kann beim Ermitteln der Farbanteilsinformation berücksichtigt werden. Die Farbanteilsinformation kann abhängig vom Farbton vorgegeben sein. Es kann beispielsweise festgestellt werden, dass der Farbton der weißen Fahrstreifenmarkierung einen Gelbstich aufweist, sodass beispielsweise als Farbton Weiß mit 10 Prozent Gelbanteil bestimmt werden kann. Der Farbstich des Farbtons der voreingestellten Farbe, das heißt beispielsweise der Gelbstich, wird weiter berücksichtigt, sodass beispielsweise vorgesehen sein kann, dass der Farbanteilsinformationsgrenzwert niedriger ist als er es bei einem anderen Farbton, zum Beispiel einem Farbton mit einem kleinere oder anderen Farbstich, wäre. Wird beispielsweise der Farbstich und somit der Farbton verändert, kann ein kleinerer Farbanteilsinformationsgrenzwert gewählt werden als zuvor. Der Farbstich kann beispielsweise aufgrund aktueller Lichtverhältnisse bestehen. Es kann also verhindert werden, dass lediglich bei einer Abweichung im Farbton von einem Farbton der reinen voreingestellten Farbe zu unerwünschten Falschauslösungen der Untersagungsinformation kommt.

Außerdem sieht es ein Ausführungsbeispiel vor, dass eine Blinklichtaktivierungsinformation ermittelt wird. Die Blinklichtaktivierungsinformation beschreibt, dass ein Blinklicht des Kraftfahrzeugs aktiviert wurde. Während das Blinklicht gemäß der ermittelten Blinklichtaktivierungsinformation aktiviert ist, wird beim Ermitteln der Farbanteilsinformation angenommen, dass die Fahrstreifenmarkierung unverändert die Farbe aufweist, die sie vor dem Aktivieren des Blinklichts gemäß der Blinklichtaktivierungsinformation aufgewiesen hat. Es wird also überprüft, ob sich während ein Blinklicht des Kraftfahrzeugs aktiviert ist, die ermittelte Farbe der Fahrstreifenmarkierung ändert, beispielsweise von der voreingestellten Farbe zur anderen Farbe. Ein derartiger Fall kann beispielsweise auftreten, wenn die voreingestellte Farbe Weiß ist und das Blinklicht in der Farbe Gelb oder Orangefarben leuchtet. Während der Betätigung des Blinklichts kann dann fälschlicherweise die andere Farbe als Farbe der Fahrstreifenmarkierung erkannt werden, sodass es zu einem Bereitstellen der Untersagungsinformation kommt, obwohl sich die Farbe der Fahrstreifenmarkierung eigentlich überhaupt nicht geändert hat. In einem solchen Fall ist es sinnvoll, dass für die Zeit, während der das Blinklicht aktiviert ist, die gegebenenfalls von der voreingestellten Farbe abweichende Farbanteilsinformation ignoriert wird. Es wird also angenommen, dass sich die Farbe der Fahrstreifenmarkierung nicht verändert hat, sodass beispielsweise weiterhin das Freigabesignal bereitgestellt wird. Das Verfahren ist somit für den Fall des aktivierten Blinklichts besonders robust gestaltet.

Darüber hinaus sieht es ein Ausführungsbeispiel vor, dass, wenn das Blinklicht wieder deaktiviert ist, überprüft wird, ob die ermittelte Farbinformation für eine Mindestfahrstrecke und/oder Mindestzeitdauer eine andere Farbe aufweist als die voreingestellte Farbe. Falls dies der Fall ist, wird die Untersagungsinformation bereitgestellt. Es wird also der Fall berücksichtigt, dass das Kraftfahrzeug beispielsweise während das Blinklicht aktiviert ist, in eine Baustelle einfährt, in der beispielsweise anstelle einer bisher weißen Fahrstreifenmarkierung nun eine orangefarbene Fahrstreifenmarkierung vorliegt. Es sollte dann möglichst schnell durch Wählen einer entsprechenden Mindestfahrstrecke oder Mindestzeitdauer dieser signifikante Wechsel der Farbinformation erkannt und berücksichtigt werden, das heißt, gegebenenfalls die Untersagungsinformation bereitgestellt werden. Die Mindestfahrstrecke kann beispielsweise 300 Meter betragen, insbesondere 50 Meter, 100 Meter oder 200 Meter. Alternativ kann die Mindestfahrstrecke 500 Meter oder 1 Kilometer betragen. Die Mindestzeitdauer kann beispielsweise 1 Sekunde, 2 Sekunden, 3 Sekunden, 5 Sekunden, insbesondere 10 Sekunden umfassen. Die Änderung der Fahrstreifenfarbe zusammen mit einem Blinkvorgang des Kraftfahrzeugs kann daher besonders schnell erkannt und berücksichtigt werden.

Gemäß einem zusätzlichen Ausführungsbeispiel ist es vorgesehen, dass der Farbanteilsinformationsgrenzwert, der Zeitdauergrenzwert, die Mindestfahrstrecke und/oder die Mindestzeitdauer zumindest teilweise abhängig von einer Situationsinformation gewählt wird. Situationsinformation beschreibt eine aktuelle Situation, in der sich das Kraftfahrzeug befindet. Es kann also berücksichtigt werden, in welcher Umgebungssituation sich das Kraftfahrzeug aktuell befindet, wobei je nach Situation der entsprechende Grenzwert beziehungsweise die Mindestfahrstrecke und/oder Mindestzeitdauer angepasst werden können. Hierdurch wird beispielsweise berücksichtigt, dass bei beispielsweise Regen die Sicht auf die Fahrstreifenmarkierung qualitativ schlechter sein kann als bei Sonnenschein, so dass beispielsweise ein niedrigerer Farbanteilsinformationsgrenzwert vorgegeben sein kann als bei gutem Wetter, da die Sensordaten mit einer höheren Ungenauigkeit behaftet sind im Vergleich zu bei Sonnenschein erfassten Sensordaten. Entsprechend können die anderen genannten Werte, das heißt der Zeitdauergrenzwert, die Mindestfahrstrecke und/oder die Mindestzeitdauer, an die aktuelle Situation angepasst werden. Hierdurch wird ein situationsabhängiges und somit besonders flexibles Verfahren ermöglicht.

Ein weiteres Ausführungsbeispiel sieht vor, dass die Situationsinformation durch Auswerten zumindest einer von folgenden Informationen ermittelt wird: Die Situationsinformation kann durch Auswerten einer Wetterinformation ermittelt werden. Die Wetterinformation beschreibt ein Wetter, insbesondere Regen, in der Umgebung des Kraftfahrzeugs. Die Wetterinformation wird insbesondere unter Berücksichtigung einer Scheibenwischeraktivierungsinformation, die eine Aktivierung eines Scheibenwischers des Kraftfahrzeugs beschreibt, ermittelt. Insbesondere kann die Wetterinformation alternativ oder zusätzlich dazu mittels eines Regensensors des Kraftfahrzeugs ermittelt werden. Die Scheibenwischeraktivierungsinformation sowie Messdaten des Regensensors können für das Kraftfahrzeug ermittelt werden oder von einem anderen Kraftfahrzeug bereitgestellt werden, das sich beispielsweise in der Umgebung des Kraftfahrzeugs befindet und das dem Kraftfahrzeug beispielsweise die Wetterinformation über eine Fahrzeug-zu-Fahrzeug-Kommunikationsverbindung bereitstellt. Anhand der Wetterinformation kann festgestellt werden, ob es aktuell regnet, was Einfluss auf die Genauigkeit der erfassten Sensordaten und somit auf die ermittelte Farbinformation haben kann.

Alternativ oder zusätzlich dazu kann die Statusinformation durch Auswerten einer Helligkeitsinformation ermittelt werden. Die Helligkeitsinformation beschreibt eine Helligkeit der Umgebung des Kraftfahrzeugs. Die Helligkeitsinformation wird insbesondere mittels eines Helligkeitssensors, insbesondere des Kraftfahrzeugs, ermittelt. Die Helligkeitsinformation kann beispielsweise unterscheiden, ob aktuell Tag oder Nacht ist. Beispielsweise bei einer Fahrt während der Nacht liegen andere Beleuchtungsbedingungen bei Erfassen der Sensordaten vor, die beispielsweise durch eine Leuchteinrichtung des Kraftfahrzeugs und/oder eine Straßenbeleuchtung bedingt sein können, im Vergleich zu einer Fahrt bei Tag. Die Helligkeitsinformation kann beispielsweise vorgeben, ob die aktuelle Beleuchtung der Umgebung des Kraftfahrzeugs eine bestimmte Farbe und/oder einen bestimmten Farbton aufweist, die beziehungsweise der beispielsweise einen Einfluss auf die Farbe der ermittelten Farbinformation haben könnte.

Alternativ oder zusätzlich dazu kann die Statusinformation durch Auswerten einer Lichtstatusinformation ermittelt werden. Die Lichtstatusinformation beschreibt einen Lichtstatus einer Leuchteinrichtung des Kraftfahrzeugs. Die Leuchteinrichtung ist beispielsweise ein Frontscheinwerfer und/oder ein Rücklicht des Kraftfahrzeugs. Die Lichtstatusinformation kann insbesondere beschreiben, ob ein Fernlicht des Kraftfahrzeugs aktiviert ist oder nicht. Hierbei wird davon ausgegangen, dass bei aktiviertem Fernlicht die Fahrstreifenmarkierung hinsichtlich ihrer Farbe mit einer höheren Genauigkeit erfasst werden kann, als es beispielsweise bei einer Fahrt mit einem Abblendlicht oder einer Fahrt ohne aktivierter Leuchteinrichtung der Fall ist. Es kann dann beispielsweise von genauer erfassten Farbinformationen ausgegangen werden, als bei entsprechend anderem Lichtstatus.

Alternativ oder zusätzlich dazu kann die Situationsinformation durch Auswerten einer Umgebungsinformation ermittelt werden. Die Umgebungsinformation beschreibt die Umgebung des Kraftfahrzeugs. Die Umgebungsinformation wird insbesondere unter Berücksichtigung der Sensordaten ermittelt. Es kann beispielsweise berücksichtigt werden, auf was für einer Straße und/oder in welcher Art von Gegend sich das Kraftfahrzeug befindet. Falls gemäß der Umgebungsinformation zum Beispiel festgestellt wird, dass sich das Kraftfahrzeug aktuell in einem Tunnel befindet, kann dies ebenfalls Auswirkungen auf die Beleuchtung des Fahrstreifens und somit auf die ermittelte Farbinformation haben.

Gegebenenfalls führt die aktuelle Situation, die mit der Wetterinformation, der Helligkeitsinformation, der Lichtstatusinformation und/oder der Umgebungsinformation beschrieben wird, dazu, dass ein abweichender Farbanteilsinformationsgrenzwert, Zeitdauergrenzwert, Mindestfahrstrecke und/oder Mindestzeitdauer sinnvoll sein kann. Es kann also situationsdifferenziert das Verfahren durchgeführt werden.

Es kann in einem zusätzlichen Ausführungsbeispiel vorgesehen sein, dass der Farbanteilsinformationsgrenzwert, der Zeitdauergrenzwert, die Mindestfahrstrecke und/oder die Mindestzeitdauer zumindest teilweise abhängig von der Farbanteilsinformation für die Fahrstrecke mit der Mindestfahrstreckenlänge gewählt wird. Die Farbanteilsinformation für die Fahrstrecke mit der Mindestfahrstreckenlänge kann alternativ als historische Fahrtinformation benannt werden, die beispielsweise für die letzten 500 Meter angibt, dass die Fahrstreifenmarkierung zu 90 Prozent die voreingestellte Farbe aufgewiesen hat. Es wird also berücksichtigt, welche Farbe, das heißt welche Farbinformation, für die bereits vergangenen Fahrstrecke erfasst wurde, da davon auszugehen ist, dass typischerweise wenige lokale Farbwechsel hinsichtlich der Fahrstreifenmarkierung zu beobachten sind. Beispielsweise kann hierdurch bei einer abgenutzten und daher schlecht sichtbare Fahrstreifenmarkierung auf Basis der bereits erfassten Farbanteilsinformation für die Fahrstrecke mit der Mindestfahrstreckenlänge ausgeschlossen werden, dass ein Farbwechsel vorliegt, da angenommen wird, dass sich die Farbe der Fahrstreifenmarkierung vermutlich nicht geändert hat beziehungsweise sich nicht häufig ändert.

Ein zusätzliches Ausführungsbeispiel sieht vor, dass eine Positionsinformation, die eine Position des Kraftfahrzeugs beschreibt, ermittelt wird. Die Positionsinformation beschreibt ein Land, in dem das Kraftfahrzeug positioniert ist. Mit anderen Worten beschreibt die Positionsinformation das Land, in dem das Kraftfahrzeug angeordnet ist beziehungsweise in dem es aktuell fährt. Die voreingestellte Farbe kann abhängig von der ermittelten Positionsinformation vorgegebenen sein. Es kann also berücksichtigt werden, dass es Länder gibt, wie beispielsweise Japan oder Korea, in denen eine Fahrstreifenmarkierung eine andere voreingestellte Farbe aufweisen kann als beispielsweise in Europa oder anderen Ländern mit hauptsächlich weißen Fahrstreifenmarkierungen. Es kann somit positionsabhängig und insbesondere länderspezifisch die sinnvolle voreingestellte Farbe gewählt werden, sodass gemäß lokal herrschender Verkehrsregeln die Freigabeinformation oder die Untersagungsinformation bereitgestellt werden kann.

Alternativ oder zusätzlich zur Ermittlung der Positionsinformation kann eine vorgegebene Länderinformation im Kraftfahrzeug bereitgestellt sein, die beispielsweise beschreibt, für welches Land das Kraftfahrzeug hergestellt wurde. Diese Länderinformation kann alternativ als Codierinformation bezeichnet werden und kann beispielsweise vorab für das Kraftfahrzeug festgelegt sein. Falls beispielsweise die Positionsinformation nicht ermittelt werden kann, kann ausgehend von der vorgegebenen Länderinformation für das Kraftfahrzeug dennoch die lokal sinnvolle voreingestellte Farbe gewählt werden.

Es kann ferner vorgesehen sein, dass abhängig von der ermittelten Positionsinformation mehrere voreingestellte Farben vorgegeben werden. Es könnte beispielsweise für eine Position in Kanada vorgegeben sein, dass die Freigabeinformation sowohl bei der voreingestellten Farbe Weiß als auch bei der voreingestellten Farbe Orangefarben oder Gelb erfolgt. Es kann also je nach lokalen Verkehrsregeln differenziert werden, nicht nur welche voreingestellte Farbe vorgegeben wird, sondern auch wie viele voreingestellte Farben vorgegeben sind. Es kann somit im Detail differenziert werden, bei welchen Farben oder Farbwechseln die beschriebenen Verfahrensschritte ausgelöst werden können oder nicht.

Gemäß einem weiteren Ausführungsbeispiel ist es vorgesehen, dass die Sensordaten im Kraftfahrzeug mittels einer Sensoreinrichtung ermittelt werden. Die Sensoreinrichtung ist insbesondere die Kamera, beispielsweise die Frontkamera des Kraftfahrzeugs. Alternativ dazu kann die Kamera die Heckkamera, die Seitenkamera und/oder die 360°-Kamera des Kraftfahrzeugs sein. Alternativ oder zusätzlich dazu können die Sensordaten als Schwarmdaten empfangen werden, die von einem anderen Fahrzeug, das ein Kraftfahrzeug sein kann, bereitgestellt werden. Die Schwarmdaten umfassen in diesem Fall zumindest Informationen zu einer Farbe der Fahrstreifenmarkierung. Die Schwarmdaten können beispielsweise mittels Fahrzeug-zu-Fahrzeug-Kommunikation an das Kraftfahrzeug übermittelt werden. Die Schwarmdaten können hierbei direkt vom anderen Fahrzeug für das Kraftfahrzeug bereitgestellt werden oder über eine externe Recheneinrichtung, beispielsweise eine Servereinrichtung, dem Kraftfahrzeug bereitgestellt werden. Hierdurch kann stets auf die maximal möglichen und optimalen Sensordaten zugegriffen werden. Es ist beispielsweise möglich, dass die Farbe der Fahrstreifenmarkierung lediglich von anderen Kraftfahrzeugen in der Umgebung ermittelt wird, die beispielsweise über eine im Vergleich zum Kraftfahrzeug qualitativ hochwertigere Kamera verfügen, wobei das Kraftfahrzeug dennoch das Verfahren durchführen kann, da ihm die Farben zum Ermitteln der Farbinformation bereitgestellt werden. Es ist ferner möglich, dass direkt die Farbinformation übermittelt wird.

Die Information kann in Form von Daten bereitgestellt werden. Die Farbinformation kann beispielsweise anhand von Farbdaten bereitgestellt werden, die Fahrstreckeninformation anhand von Fahrstreckendaten, die Farbanteilsinformation anhand von Farbanteilsdaten, die Freigabeinformation anhand von Freigabedaten, die Untersagungsinformation anhand von Untersagungsdaten, die Zeitdauerinformation anhand von Zeitdauerdaten, die Farbwechselanzahlinformation anhand von Farbewechselanzahldaten, die Blinklichtaktivierungsinformation anhand von Blinklichtaktivierungsdaten, die Situationsinformation anhand von Situationsinformationsdaten, die Wetterinformation anhand von Wetterdaten, die Helligkeitsinformation anhand von Helligkeitsdaten, die Lichtstatusinformation anhand von Lichtstatusdaten und/oder die Umgebungsinformation anhand von Umgebungsdaten.

Ein weiteres Ausführungsbeispiel der Erfindung betrifft ein Kraftfahrzeug. Das Kraftfahrzeug ist dazu ausgebildet, das oben beschriebene Verfahren, ein einzelnes Ausführungsbeispiel oder eine Kombination von möglichen Ausführungsbeispielen durchzuführen. Das Kraftfahrzeug kann beispielsweise ein Personenkraftwagen, ein Lastkraftwagen, ein Bus und/oder ein Motorrad sein.

Das Kraftfahrzeug kann eine Steuervorrichtung aufweisen. Die Steuervorrichtung weist eine Prozessoreinrichtung auf, die dazu eingerichtet ist, das erfindungsgemäße Verfahren oder ein Ausführungsbeispiel des erfindungsgemäßen Verfahrens, einzeln oder in Kombination und soweit anwendbar, durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung das erfindungsgemäße Verfahren oder das Ausführungsbeispiel des erfindungsgemäßen Verfahrens, einzeln oder in Kombination mit zumindest einem anderen Ausführungsbeispiel, durchzuführen. Der Programmcode kann in einem Datenspeicher der Prozessoreinrichtung gespeichert sein.

Ein weiteres Ausführungsbeispiel, das jedoch nicht unter die vorliegende Erfindung fällt, betrifft ein Computerprogrammprodukt, das beispielsweise ein Computerprogramm sein kann. Das Computerprogrammprodukt umfasst Befehle, die bei der Ausführung des Programms durch einen Computer, beispielsweise durch die Steuervorrichtung des Kraftfahrzeugs, diesen veranlassen, das oben beschriebene Verfahren sowie einzelne oder mehrere Ausführungsbeispiele des erfindungsgemäßen Verfahrens durchzuführen.

Die Erfindung umfasst auch die Kombinationen der Merkmale der beschriebenen Ausführungsformen, das heißt der Ausführungsbeispiele.

Im Folgenden werden Ausführungsbeispiele der Erfindung beschrieben. Hierzu zeigt:
- Fig. 1: eine schematische Darstellung eines auf einer Straße fahrenden Kraftfahrzeugs;
- Fig. 2: in schematischer Darstellung einen Signalflussgraphen eines Verfahrens zum Freigeben eines zumindest assistierten Fahrstreifenwechsels für ein Kraftfahrzeug; und
- Fig. 3: in schematischer Darstellung verschiedene Möglichkeiten zum Bereitstellen einer Situationsinformation.

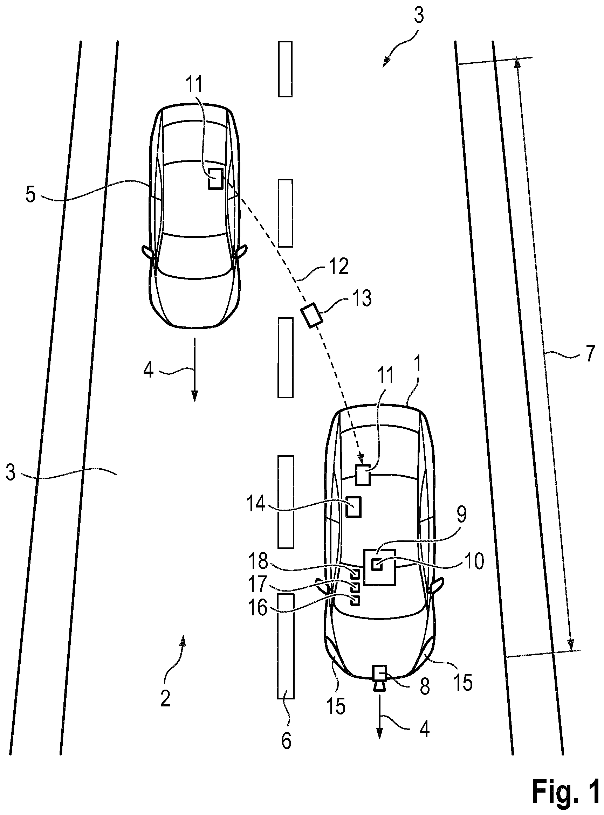

In den Figuren sind funktionsgleiche Elemente jeweils mit denselben Bezugszeichen versehen. Fig. 1 zeigt ein Kraftfahrzeug 1, das auf einer Straße 2 auf einem Fahrstreifen 3 in einer Fahrtrichtung 4 fährt. Auf der Straße 2 fährt zudem ein weiteres Fahrzeug 5, dessen Fahrtrichtung 4 der Fahrtrichtung 4 des Kraftfahrzeugs 1 entspricht. Die dargestellte Straße 2 ist beispielsweise eine Schnellstraße mit zwei parallelen Fahrstreifen 3 für die gemeinsame Fahrtrichtung 4. Die beiden Fahrstreifen 3 sind mittels einer Fahrstreifenmarkierung 6 voneinander getrennt, die hier als gestrichelte Linie, das heißt, als unterbrochene Fahrstreifenmarkierung 6, vorgesehen ist. An den äußeren Rändern der Straße 2 kann diese mit durchgezogenen Linien als dortige Fahrstreifenmarkierung 6 begrenzt sein. Es ist ferner eingezeichnet, dass das Kraftfahrzeug 1 bereits eine Fahrstrecke 7 auf dem Fahrstreifen 3 gefahren ist. Die Fahrstrecke 7 kann beispielsweise 500 Meter lang sein.

Das Kraftfahrzeug 1 weist eine Sensoreinrichtung 8 auf, die hier als Kamera, insbesondere als Frontkamera, ausgebildet ist. Ferner weist das Kraftfahrzeug 1 eine Steuervorrichtung 9 auf, die zumindest dazu ausgebildet ist, ein Fahrerassistenzsystem 10 bereitzustellen, das beispielsweise einen assistierten Fahrstreifenwechsel für das Kraftfahrzeug 1 durchführen kann. Die Steuervorrichtung 9 kann also dazu ausgebildet sein, zumindest eine Querführung des Kraftfahrzeugs 1 anzusteuern.

Das Kraftfahrzeug 1 kann eine Kommunikationsschnittstelle 11 aufweisen. Die Kommunikationsschnittstelle 11 des Kraftfahrzeugs 1 kann mittels einer Kommunikationsverbindung 12 mit einer Kommunikationsschnittstelle 11 des weiteren Fahrzeugs 5 beispielsweise verbunden sein, sodass über die Kommunikationsverbindung 12 beispielsweise Schwarmdaten 13 vom weiteren Fahrzeug 5 ausgesendet und vom Kraftfahrzeug 1 empfangen werden können. Alternativ oder zusätzlich dazu können die Schwarmdaten 13 beispielsweise von einer externen Recheneinrichtung, wie beispielsweise einem Server, bereitgestellt und beispielsweise über eine Kommunikationsverbindung 12 zwischen der externen Recheneinrichtung und der Kommunikationsschnittstelle 11 des Kraftfahrzeugs 1 dem Kraftfahrzeug 1 bereitgestellt werden. Die Kommunikationsverbindung 12 kann kabellos, insbesondere drahtlos, ausgebildet sein, beispielsweise über ein drahtloses lokales Netzwerk (WLAN für Wireless Local Area Network), eine Bluetooth-Verbindung und/oder ein mobiles Datennetzwerk, beispielsweise basierend auf dem Mobilfunkstandard Long Term Evolution (LTE), Long Term Evolution Advanced (LTE-A), Fifth Generation (5G) oder Sixth Generation (6G).

Das Kraftfahrzeug 1 kann eine Positionsermittlungseinrichtung 14 aufweisen, die dazu ausgebildet ist, eine Position des Kraftfahrzeugs 1 zu erfassen, insbesondere ein Land, in dem das Kraftfahrzeug 1 aktuell fährt. Außerdem kann das Kraftfahrzeug 1 eine Leuchteinrichtung 15, wie beispielsweise Frontscheinwerfer, aufweisen, die eine Beleuchtung einer Umgebung des Kraftfahrzeugs 1 bereitstellen können. Mittels der Leuchteinrichtung 15 kann ferner ein Blinklicht des Kraftfahrzeugs 1 bereitgestellt werden, das beispielsweise von einem Fahrer des Kraftfahrzeugs 1 manuell aktiviert werden kann. Das Kraftfahrzeug 1 kann außerdem einen Helligkeitssensor aufweisen, der eine Helligkeit der Umgebung des Kraftfahrzeugs 1 erfassen kann. Zudem kann das Kraftfahrzeug 1 beispielsweise eine Scheibenwischersteuereinrichtung 17 für einen Scheibenwischer des Kraftfahrzeugs 1 und/oder einen Regensensor 18 zum Erfassen von Regen aufweisen. Sowohl mittels der Scheibenwischersteuereinrichtung 17 als auch mittels des Regensensors 18 kann prinzipiell erkannt werden, ob es aktuell regnet oder nicht

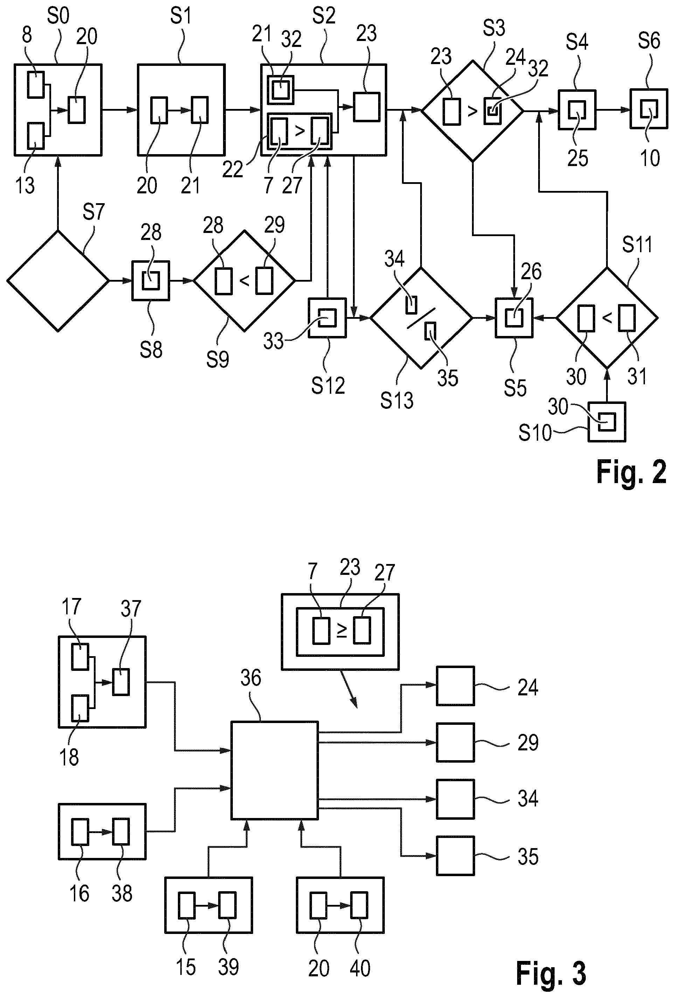

In Fig. 2 ist ein Verfahren zum Freigeben eines zumindest assistierten Fahrstreifenwechsels für ein Kraftfahrzeug 1 skizziert. In einem Vorverfahrensschritt S0, erfolgt zum Beispiel ein Bereitstellen von Sensordaten 20. Die Sensordaten 20 können im Kraftfahrzeug 1 mittels der Sensoreinrichtung 8, das heißt beispielsweise mittels der Kamera, ermittelt werden. Alternativ oder zusätzlich dazu können die Sensordaten 20 als Schwarmdaten 13, die vom anderen Fahrzeug 5 bereitgestellt werden, empfangen werden. Die Sensordaten 20 zeichnen sich dadurch aus, dass sie zumindest eine Farbe der Fahrstreifenmarkierung 6 beschreiben, wobei die Fahrstreifenmarkierung 6 den Fahrstreifen 3 begrenzt, auf dem das Kraftfahrzeug 1 fährt.

In einem Verfahrensschritt S1 erfolgt ein Ermitteln einer Farbinformation 21, die die Farbe der Fahrstreifenmarkierung 6 des Fahrstreifens 3 beschreibt, auf dem das Kraftfahrzeug 1 fährt. Die Farbinformation 21 wird durch Auswerten der Sensordaten 20 bestimmt. Daraufhin erfolgt in einem Verfahrensschritt S2 ein Ermitteln einer Farbanteilsinformation 23. Dies erfolgt durch Auswerten der ermittelten Farbinformation 21 sowie durch Auswerten einer Fahrstreckeninformation 22, die die vom Kraftfahrzeug 1 abgefahrene Fahrstrecke 7 auf dem Fahrstreifen 3 beschreibt. Die ermittelte Farbanteilsinformation 23 beschreibt einen Anteil der Fahrstrecke 7 des Kraftfahrzeugs 1, in dem die Fahrstreifenmarkierung 6 eine voreingestellte Farbe aufweist. Alternativ oder zusätzlich dazu beschreibt die ermittelte Farbanteilsinformation 23 einen Anteil einer Fahrzeit des Kraftfahrzeugs 1, in der die Fahrstreifenmarkierung 6 die voreingestellte Farbe aufweist. Dies erfolgt durch Auswerten der ermittelten Farbinformation 21 sowie durch Auswerten einer Fahrzeitinformation, die die Fahrzeit des Kraftfahrzeugs 1 beschreibt. Die voreingestellte Farbe kann beispielsweise Weiß sein.

In einem weiteren Verfahrensschritt S3 wird überprüft, ob die ermittelte Farbanteilsinformation 23 größer als ein Farbanteilsinformationsgrenzwert 24 ist. Falls hierbei festgestellt wird, dass die ermittelte Farbanteilsinformation 23 größer als der Farbanteilsinformationsgrenzwert 24 ist, erfolgt in einem Verfahrensschritt S4 ein Bereitstellen einer Freigabeinformation 25. Die Freigabeinformation 25 beschreibt, dass der zumindest assistierte Fahrstreifenwechsel freigegeben ist. Hierdurch kann beispielsweise das Fahrerassistenzsystem 10 die Meldung erhalten, dass es den zumindest assistierten Fahrstreifenwechsel durchführen kann, falls dies situationsbeding sinnvoll ist. Falls jedoch im Verfahrensschritt S3 festgestellt wird, dass die ermittelte Farbanteilsinformation 23 kleiner oder gleich dem Farbanteilsinformationsgrenzwert 24 ist, erfolgt in einem Verfahrensschritt S5 ein Bereitstellen einer Untersagungsinformation 26. Die Untersagungsinformation 26 beschreibt, dass das Freigeben des zumindest assistierten Fahrstreifenwechsels untersagt ist. Es kann daraufhin beispielsweise nicht mittels des Fahrerassistenzsystems 10 die Querführung des Kraftfahrzeugs 1 derart angesteuert werden, dass ein Fahrstreifenwechsel durchgeführt wird.

Es kann ferner in einem Verfahrensschritt S6 vorgesehen sein, dass, nachdem die Freigabeinformation 25 bereitgestellt wurde, der zumindest assistierte Fahrstreifenwechsel durchgeführt wird. Mit der Steuervorrichtung 9 kann dann beispielsweise die Querführung des Kraftfahrzeugs 1 zum Durchführen des assistierten Fahrstreifenwechsels, insbesondere eines teilautomatischen oder sogar vollautomatischen Fahrstreifenwechsels, angesteuert werden.

Es kann vorgesehen sein, dass die Farbanteilsinformation 23 basierend darauf ermittelt wird, dass die Fahrstrecke 7 gemäß der Fahrstreckeninformation 22 eine Fahrstreckenlänge aufweist, die größer ist als eine Mindestfahrstreckenlänge 27. Die Mindestfahrstreckenlänge 27 ist beispielsweise 500 Meter. Alternativ oder zusätzlich dazu kann es vorgesehen sein, dass die Farbanteilsinformation 23 basierend darauf ermittelt wird, dass die Fahrzeit, für die die Farbanteilsinformation 23 ermittelt wird, eine Fahrzeitdauer aufweist, die größer als eine Mindestfahrzeitdauer ist. Die Mindestfahrzeitdauer ist beispielsweise 5 Sekunden, ausgehend von einem aktuellen Zeitpunkt betrachtet.

In einem Verfahrensschritt S7 kann überprüft werden, ob gemäß der ermittelten Farbinformation 21 ein Farbwechsel zwischen der voreingestellten Farbe, das heißt, beispielsweise zwischen der Farbe Weiß, und einer davon abweichenden anderen Farbe, wie beispielsweise orangefarben oder gelb erfolgt ist. Falls der Farbwechsel zur anderen Farbe erfolgt ist, wird in einem Verfahrensschritt S8 eine Zeitdauerinformation 28 ermittelt. Die Zeitdauerinformation 28 beschreibt, für welche Zeitdauer die Farbinformation 21 die andere Farbe beschreibt. Im Verfahrensschritt S9 wird überprüft, ob die Zeitdauerinformation 28 kleiner als ein Zeitdauergrenzwert 29 ist. Falls die ermittelte Zeitdauerinformation 28 kleiner als der Zeitdauergrenzwert 29 ist, wird beim Ermitteln der Farbanteilsinformation 23 im Verfahrensschritt S2 angenommen, dass in der Zeitdauer die Fahrstreifenmarkierung 6 die voreingestellte Farbe aufgewiesen hat. Es werden also jegliche Farbwechsel ignoriert, da diese nur in einer Zeitdauer festgestellt wurden, die kleiner ist als der Zeitdauergrenzwert 29. Falls im Verfahrensschritt S7 festgestellt wird, dass kein Farbwechsel stattgefunden hat, kann beispielsweise der Verfahrensschritt S0 oder der Verfahrensschritt S1 erneut durchgeführt werden. Falls das Überprüfen im Verfahrensschritt S9 nicht erfolgreich ist, das heißt, falls die Zeitdauerinformation 28 größer oder gleich dem Zeitdauergrenzwert 29 ist, wird dies berücksichtigt und beispielsweise ein entsprechender Farbwechsel zur anderen Farbe festgestellt, sodass gegebenenfalls im Verfahrensschritt S3 das Überprüfen negativ ist, das heißt, dass letztendlich die Untersagungsinformation 26 bereitgestellt wird.

In einem Verfahrensschritt S10 kann eine Farbwechselanzahlinformation 30 ermittelt werden. Die Farbwechselanzahlinformation 30 beschreibt eine Anzahl an Farbwechseln zwischen der voreingestellten Farbe und einer davon abweichenden anderen Farbe. Im Verfahrensschritt S11 kann daraufhin überprüft werden, ob die ermittelte Farbwechselanzahlinformation 30 kleiner als ein Farbwechselanzahlgrenzwert 31 ist. Falls dies der Fall ist, insbesondere nur falls dies der Fall ist, wird die Freigabeinformation 25 bereitgestellt, das heißt, beispielsweise der Verfahrensschritt S4 durchgeführt. Falls das Überprüfen negativ ist, das heißt, falls die ermittelte Farbwechselanzahlinformation 30 größer oder gleich dem Farbwechselanzahlgrenzwert 31 ist, kann beispielsweise die Untersagungsinformation 26 im Verfahrensschritt S5 bereitgestellt werden. Die Farbwechselanzahlinformation 30 gibt die Anzahl der Farbwechsel bevorzugt zeitabhängig und/oder wegabhängig an.

Es kann vorgesehen sein, dass die ermittelte Farbinformation 21 einen Farbton 32 der Farbe beschreibt. Der Farbton 32 kann beim Ermitteln der Farbanteilsinformation 23 berücksichtigt werden. Außerdem kann der Farbanteilsinformationsgrenzwert 24 abhängig vom Farbton 32 vorgegeben sein.

In einem Verfahrensschritt S12 kann eine Blinklichtaktivierungsinformation 33 ermittelt werden. Die Blinklichtaktivierungsinformation 33 beschreibt, dass das Blinklicht des Kraftfahrzeugs 1 aktiviert wurde, das heißt, dass die Leuchteinrichtung 15 derart aktiviert wurde, dass sie das Blinklicht bereitstellt. Während das Blinklicht gemäß der ermittelten Blinklichtaktivierungsinformation 33 aktiviert ist, wird beim Ermitteln der Farbanteilsinformation 23 angenommen, dass die Fahrstreifenmarkierung 6 unverändert die Farbe aufweist, die sie vor dem Aktivieren des Blinklichts gemäß der Blinklichtaktivierungsinformation 33 aufgewiesen hat. Es kann dann beispielsweise die Zeitdauer, in der das Blinklicht aktiviert war, ignoriert werden, da jeglicher Farbwechsel während des aktivierten Blinklichts als nicht registrierter Farbwechsel angenommen wird.

Wenn das Blinklicht wieder deaktiviert ist, kann im Verfahrensschritt S13 überprüft werden, ob die ermittelte Farbinformation 21 für eine Mindestfahrstrecke 34 und/oder Mindestzeitdauer 35 eine andere Farbe aufweist als die voreingestellte Farbe. Falls dies der Fall ist, das heißt, falls dieses Überprüfen erfolgreich ist, kann die Untersagungsinformation 26 gemäß dem Verfahrensschritt S5 direkt bereitgestellt werden. Falls die ermittelte Farbinformation 21 nicht für die Mindestfahrstrecke 34 und/oder Mindestzeitdauer 35 die andere Farbe aufweist, sondern beispielsweise weiterhin die voreingestellte Farbe, kann daraufhin der Verfahrensschritt S3 durchgeführt werden.

In Fig. 3 ist eine Situationsinformation 36 schematisch dargestellt, abhängig von der beispielsweise der Farbanteilsinformationsgrenzwert 24, der Zeitdauergrenzwert 29, die Mindestfahrstrecke 34 und/oder die Mindestzeitdauer 35 gewählt werden können. Die Situationsinformation 36 beschreibt eine aktuelle Situation, in der sich das Kraftfahrzeug 1 befindet. Die Situationsinformation 36 kann beispielsweise basierend auf einer von vier Informationen ermittelt werden, und zwar durch Auswerten einer Wetterinformation 37, einer Helligkeitsinformation 38, einer Lichtstatusinformation 39 und/oder einer Umgebungsinformation 40. Die Wetterinformation 37 beschreibt ein Wetter, insbesondere Regen, in der Umgebung des Kraftfahrzeugs 1. Die Wetterinformation 37 kann unter Berücksichtigung von Daten der Scheibenwischersteuereinrichtung 17 bereitgestellt werden. Es kann also hierfür eine Scheibenwischeraktivierungsinformation, die die Aktivierung des Scheibenwischers beschreibt, berücksichtigt werden, wobei die Scheibenwischeraktivierungsinformation von der Scheibenwischersteuereinrichtung 17 erfasst und bereitgestellt werden kann. Alternativ oder zusätzlich dazu kann die Wetterinformation 37 mittels des Regensensors 18 bereitgestellt und/oder ausgewertet werden. Es kann ferner möglich sein, dass die Wetterinformation 37 von der externen Recheneinrichtung und/oder dem anderen Fahrzeug 5 bereitgestellt wird. Die Helligkeitsinformation 38 beschreibt eine Helligkeit in der Umgebung des Kraftfahrzeugs 1 und kann mittels des Helligkeitssensors 16 bereitgestellt oder ermittelt werden. Die Lichtstatusinformation 39 beschreibt einen Lichtstatus der Leuchteinrichtung 15 des Kraftfahrzeugs 1 und wird daher beispielsweise von der Leuchteinrichtung 15 bereitgestellt. Die Lichtstatusinformation 39 kann insbesondere beschreiben, ob das Fernlicht des Kraftfahrzeugs 1 aktiviert ist oder nicht. Die Umgebungsinformation 40 beschreibt die Umgebung des Kraftfahrzeugs 1 und wird unter Berücksichtigung der Sensordaten 20 ermittelt. Die Umgebungsinformation 40 kann beispielsweise beschreiben, dass das Kraftfahrzeug 1 aktuell durch einen Tunnel fährt.

Der Farbanteilsinformationsgrenzwert 24, der Zeitdauergrenzwert 29, die Mindestfahrstrecke 34 und/oder die Mindestzeitdauer 35 können ferner abhängig von der Farbanteilsinformation 23 für die Fahrstrecke 7, deren Fahrstreckenlänge größer oder gleich der Mindestfahrstreckenlänge 27 ist, gewählt werden. Es können also letztendlich historische Daten berücksichtigt werden, die beschreiben, wie hoch der Anteil an beispielsweise Fahrstreifenmarkierungen 6 in der voreingestellten Farbe in den letzten 500 Metern war, sodass beispielsweise davon ausgegangen wird, dass ein plötzlicher Farbwechsel eher unwahrscheinlich ist und somit diese historische Information Aussagekraft für die aktuelle oder zukünftige Farbe der Fahrstreifenmarkierung 6 hat.

Es kann ferner mittels der Positionsermittlungseinrichtung 14 des Kraftfahrzeugs 1 eine Positionsinformation, die die Position des Kraftfahrzeugs 1, insbesondere das Land, in dem das Kraftfahrzeug 1 positioniert ist, beschreibt, ermittelt wird. Die voreingestellte Farbe kann abhängig von der ermittelten Positionsinformation vorgegeben sein. Alternativ oder zusätzlich dazu kann im Kraftfahrzeug 1 eine vorgegebene Länderinformation vorliegen, die das Land beschreibt, für das das Kraftfahrzeug 1 hergestellt wurde. Abhängig von der ermittelten Positionsinformation können mehrere voreingestellte Farben vorgegeben werden, beispielsweise für das Land Kanada als Positionsinformation die voreingestellten Farben Weiß und Orangefarben/Gelb. Es kann ferner berücksichtigt werden, dass es Länder gibt, in denen nicht bei weißer Fahrstreifenmarkierung 6 der Fahrstreifenwechsel möglich ist, sondern beispielsweise auch bei andersfarbigen Fahrstreifenmarkierungen 6.

Insgesamt zeigen die Beispiele ein Verfahren zur Steuerung der Robustheit eines assistierten Fahrstreifenwechsels.

### Bezugszeichenliste

- 1: Kraftfahrzeug
- 2: Straße
- 3: Fahrstreifen
- 4: Fahrtrichtung
- 5: Fahrzeug
- 6: Fahrstreifenmarkierung
- 7: Fahrstrecke
- 8: Sensoreinrichtung
- 9: Steuervorrichtung
- 10: Fahrerassistenzsystem
- 11: Kommunikationsschnittstelle
- 12: Kommunikationsverbindung
- 13: Schwarmdaten
- 14: Positionsermittlungseinrichtung
- 15: Leuchteinrichtung
- 16: Helligkeitssensor
- 17: Scheibenwischersteuereinrichtung
- 18: Regensensor
- 20: Sensordaten
- 21: Farbinformation
- 22: Fahrstreckeninformation
- 23: Farbanteilsinformation
- 24: Farbanteilsinformationsgrenzwert
- 25: Freigabeinformation
- 26: Untersagungsinformation
- 27: Mindestfahrstreckenlänge
- 28: Zeitdauerinformation
- 29: Zeitdauergrenzwert
- 30: Farbwechselanzahlinformation
- 31: Farbwechselanzahlgrenzwert
- 32: Farbton
- 33: Blinklichtaktivierungsinformation
- 34: Mindestfahrstrecke
- 35: Mindestzeitdauer
- 36: Situationsinformation
- 37: Wetterinformation
- 38: Helligkeitsinformation
- 39: Lichtstatusinformation
- 40: Umgebungsinformation
- S0 bis S13: Verfahrensschritte

## Patentansprüche

1. Verfahren zum Freigeben eines zumindest assistierten Fahrstreifenwechsels für ein Kraftfahrzeug (1), wobei das Verfahren folgende Schritte aufweist:
- Ermitteln (S1) einer Farbinformation (21), die eine Farbe einer Fahrstreifenmarkierung (6) eines Fahrstreifens (3) beschreibt, auf dem das Kraftfahrzeug (1) fährt, durch Auswerten von Sensordaten (20), die die Farbe der Fahrstreifenmarkierung (6) beschreiben;
**gekennzeichnet durch**
- Ermitteln (S2) einer Farbanteilsinformation (23), die einen Anteil einer Fahrstrecke (7) des Kraftfahrzeugs (1), in dem die Fahrstreifenmarkierung (6) eine voreingestellte Farbe aufweist, und/oder einen Anteil einer Fahrzeit des Kraftfahrzeugs (1), in der die Fahrstreifenmarkierung (6) die voreingestellte Farbe aufweist, beschreibt, wobei die Farbanteilsinformation (23), die den Anteil der Fahrstrecke (7) beschreibt, durch Auswerten einer Fahrstreckeninformation (22), die die vom Kraftfahrzeug (1) abgefahrene Fahrstrecke (7) beschreibt, und durch Auswerten der ermittelten Farbinformation (21) ermittelt wird und die Farbanteilsinformation (23), die den Anteil der Fahrzeit beschreibt, durch Auswerten einer Fahrzeitinformation, die die Fahrzeit des Kraftfahrzeugs beschreibt, und durch Auswerten der ermittelten Farbinformation (21) ermittelt wird;
- falls die ermittelte Farbanteilsinformation (23) größer als ein Farbanteilsinformationsgrenzwert (24) ist, Bereitstellen (S4) einer Freigabeinformation (25), die beschreibt, dass der zumindest assistierte Fahrstreifenwechsel freigegeben ist, und
- falls die ermittelte Farbanteilsinformation (23) kleiner oder gleich dem Farbanteilsinformationsgrenzwert (24) ist, Bereitstellen (S5) einer Untersagungsinformation (26), die beschreibt, dass das Freigeben des zumindest assistierten Fahrstreifenwechsels untersagt ist.

2. Verfahren nach Anspruch 1, wobei die Fahrstrecke (7), für die die Farbanteilsinformation (23) ermittelt wird, eine Fahrstreckenlänge aufweist, die größer als eine Mindestfahrstreckenlänge (27) ist, und/oder die Fahrzeit, für die die Farbanteilsinformation (23) ermittelt wird, eine Fahrzeitdauer aufweist, die größer als eine Mindestfahrzeitdauer ist.

3. Verfahren nach einem der vorhergehenden Ansprüche, wobei überprüft wird (S7), ob gemäß der ermittelten Farbinformation (21) ein Farbwechsel zwischen der voreingestellten Farbe und einer davon abweichenden anderen Farbe erfolgt ist, und, falls der Farbwechsel zur anderen Farbe erfolgt ist, eine Zeitdauerinformation (28) ermittelt wird (S8), die beschreibt, für welche Zeitdauer die Farbinformation (21) die andere Farbe beschreibt, wobei, falls die Zeitdauerinformation (28) kleiner als ein Zeitdauergrenzwert (29) ist (S9), beim Ermitteln der Farbanteilsinformation (23) angenommen wird, dass in der Zeitdauer die Fahrstreifenmarkierung (6) die voreingestellte Farbe aufgewiesen hat.

4. Verfahren nach einem der vorhergehenden Ansprüche, wobei eine Farbwechselanzahlinformation (30) ermittelt wird (S10), die eine Anzahl an Farbwechseln zwischen der voreingestellten Farbe und einer davon abweichenden anderen Farbe beschreibt, und überprüft wird (S11), ob die ermittelte Farbwechselanzahlinformation (30) kleiner als ein Farbwechselanzahlgrenzwert (31) ist, wobei nur falls dies der Fall ist, die Freigabeinformation (25) bereitgestellt wird.

5. Verfahren nach Anspruch 4, wobei die Farbwechselanzahlinformation (30) die Anzahl der Farbwechsel zeitabhängig und/oder wegabhängig beschreibt.

6. Verfahren nach einem der vorhergehenden Ansprüche, wobei die ermittelte Farbinformation (21) einen Farbton (32) der Farbe beschreibt, der Farbton (32) beim Ermitteln der Farbanteilsinformation (23) berücksichtigt wird und der Farbanteilsinformationsgrenzwert (24) abhängig vom Farbton (32) vorgegeben ist.

7. Verfahren nach einem der vorhergehenden Ansprüche, wobei eine Blinklichtaktivierungsinformation (33) ermittelt wird (S12), die beschreibt, dass ein Blinklicht des Kraftfahrzeugs (1) aktiviert wurde, wobei während das Blinklicht gemäß der ermittelten Blinklichtaktivierungsinformation (33) aktiviert ist, beim Ermitteln der Farbanteilsinformation (23) angenommen wird, dass die Fahrstreifenmarkierung (6) unverändert die Farbe aufweist, die sie vor dem Aktivieren des Blinklichts gemäß der Blinklichtaktivierungsinformation (33) aufgewiesen hat.

8. Verfahren nach Anspruch 7, wobei, wenn das Blinklicht wieder deaktiviert ist, überprüft wird (S13), ob die ermittelte Farbinformation (21) für eine Mindestfahrstrecke (34) und/oder Mindestzeitdauer (35) eine andere Farbe aufweist, als die voreingestellte Farbe, wobei falls dies der Fall ist, die Untersagungsinformation (26) bereitgestellt wird.

9. Verfahren nach Anspruch 8 in dessen Rückbezügen auf Anspruch 3, wobei der Farbanteilsinformationsgrenzwert (24), der Zeitdauergrenzwert (29), die Mindestfahrstrecke (34) und/oder die Mindestzeitdauer (35) zumindest teilweise abhängig von einer Situationsinformation (36), die eine aktuellen Situation, in der sich das Kraftfahrzeug (1) befindet, beschreibt, gewählt wird.

10. Verfahren nach Anspruch 9, wobei die Situationsinformation (36) durch Auswerten zumindest einer der folgenden Informationen ermittelt wird:
- einer Wetterinformation (37), die ein Wetter, insbesondere Regen, in einer Umgebung des Kraftfahrzeugs (1) beschreibt, wobei die Wetterinformation (37) insbesondere unter Berücksichtigung einer Scheibenwischeraktivierungsinformation, die eine Aktivierung eines Scheibenwischers beschreibt, und/oder mittels eines Regensensors (18) ermittelt wird;
- einer Helligkeitsinformation (38), die eine Helligkeit der Umgebung des Kraftfahrzeugs (1) beschreibt und insbesondere mittels eines Helligkeitssensors (16) ermittelt wird;
- einer Lichtstatusinformation (39), die einen Lichtstatus einer Leuchteinrichtung (15) des Kraftfahrzeugs (1) beschreibt, insbesondere ob ein Fernlicht des Kraftfahrzeugs (1) aktiviert ist; und/oder
- einer Umgebungsinformation (40), die die Umgebung des Kraftfahrzeugs (1) beschreibt und insbesondere unter Berücksichtigung der Sensordaten (20) ermittelt wird.

11. Verfahren nach einem der Ansprüche 8 bis 10, in deren Rückbezügen auf Anspruch 2, wobei der Farbanteilsinformationsgrenzwert (24), der Zeitdauergrenzwert (29), die Mindestfahrstrecke (34) und/oder die Mindestzeitdauer (35) zumindest teilweise abhängig von der Farbanteilsinformation (23) für die Fahrstrecke (7) mit der Mindestfahrstreckenlänge (27) gewählt wird, sodass berücksichtigt wird, welche Farbe für die bereits vergangene Fahrstrecke (7) erfasst wurde, da davon auszugehen ist, dass typischerweise wenige lokale Farbwechsel hinsichtlich der Fahrstreifenmarkierung (6) zu beobachten sind.

12. Verfahren nach einem der vorhergehenden Ansprüche, wobei eine Positionsinformation, die ein Land, in dem das Kraftfahrzeug (1) positioniert ist, beschreibt, ermittelt und die voreingestellte Farbe abhängig von der ermittelten Positionsinformation vorgegeben wird.

13. Verfahren nach Anspruch 12, wobei abhängig von der ermittelten Positionsinformation mehrere voreingestellte Farben vorgegeben werden.

14. Verfahren nach einem der vorhergehenden Ansprüche, wobei die Sensordaten (20) im Kraftfahrzeug (1) mittels einer Sensoreinrichtung (8), insbesondere mittels einer Kamera, ermittelt und/oder als Schwarmdaten (13), die von einem anderen Fahrzeug (5) bereitgestellt werden, empfangen werden.

15. Kraftfahrzeug (1), das dazu ausgebildet ist, ein Verfahren nach einem der vorhergehenden Ansprüche durchzuführen.

## Claims

1. Method for enabling an at least assisted lane change for a motor vehicle (1), the method comprising the following steps:
- determining (S1) color information (21) which indicates a color of a lane marking (6) of a lane (3) on which the motor vehicle (1) is traveling, by evaluating sensor data (20) which indicate the color of the lane marking (6);
**characterized by**
- determining (S2) color proportion information (23) which indicates a proportion of a route (7) of the motor vehicle (1) in which the lane marking (6) has a preset color, and/or a proportion of a travel time of the motor vehicle (1) in which the lane marking (6) has the preset color, the color proportion information (23) which indicates the proportion of the route (7) being determined by evaluating route information (22) which indicates the route (7) traveled by the motor vehicle (1) and by evaluating the determined color information (21), and the color proportion information (23) which indicates the proportion of the travel time being determined by evaluating travel time information which indicates the travel time of the motor vehicle, and by evaluating the determined color information (21);
- providing (S4) enabling information (25) which indicates that the at least assisted lane change is enabled, if the determined color proportion information (23) is greater than a color proportion information limit value (24), and
- providing (S5) prohibition information (26) which indicates that the enabling of the at least assisted lane change is prohibited, if the determined color proportion information (23) is less than or equal to the color proportion information limit value (24).

2. Method according to claim 1, wherein the route (7) for which the color proportion information (23) is determined has a route length which is greater than a minimum route length (27), and/or the travel time for which the color proportion information (23) is determined has a travel duration which is greater than a minimum travel duration.

3. Method according to either of the preceding claims, wherein a check is carried out (S7) as to whether a color change between the preset color and another color deviating therefrom has occurred according to the determined color information (21), and, if the color change to the other color has occurred, duration information (28) is determined (S8) which indicates a duration for which the color information (21) indicates the other color, wherein, if the duration information (28) is (S9) less than a duration limit value (29), it is assumed when determining the color proportion information (23) that the lane marking (6) had the preset color during the duration.

4. Method according to any of the preceding claims, wherein color change number information (30) is determined (S10) which indicates a number of color changes between the preset color and another color deviating therefrom, and a check is carried out (S11) as to whether the determined color change number information (30) is less than a color change number limit value (31), wherein the enabling information (25) is provided only if this is the case.

5. Method according to claim 4, wherein the color change number information (30) indicates the number of color changes in a time-dependent and/or distance-dependent manner.

6. Method according to any of the preceding claims, wherein the determined color information (21) indicates a hue (32) of the color, the hue (32) is taken into account when determining the color proportion information (23), and the color proportion information limit value (24) is predetermined depending on the hue (32).

7. Method according to any of the preceding claims, wherein flashing light activation information (33) is determined (S12) which indicates that a flashing light of the motor vehicle (1) has been activated, wherein, while the flashing light is activated according to the determined flashing light activation information (33), it is assumed when determining the color proportion information (23) that the lane marking (6) has the same color as it had before the flashing light was activated according to the flashing light activation information (33).

8. Method according to claim 7, wherein, when the flashing light is deactivated again, a check is carried out (S13) as to whether the determined color information (21) for a minimum route (34) and/or minimum duration (35) has a different color than the preset color, wherein if this is the case, the prohibition information (26) is provided.

9. Method according to claim 8 in its references to claim 3, wherein the color proportion information limit value (24), the duration limit value (29), the minimum route (34) and/or the minimum duration (35) is selected at least partially depending on situation information (36) which indicates a current situation the motor vehicle (1) is in.

10. Method according to claim 9, wherein the situation information (36) is determined by evaluating at least one of the following pieces of information:
- weather information (37) which indicates weather, in particular rain, in an environment of the motor vehicle (1), wherein the weather information (37) is determined in particular taking into account windshield wiper activation information which indicates an activation of a windshield wiper, and/or by means of a rain sensor (18);
- brightness information (38) which indicates a brightness of the environment of the motor vehicle (1) and is determined in particular by means of a brightness sensor (16);
- light status information (39) which indicates a light status of a lighting device (15) of the motor vehicle (1), in particular whether a high beam of the motor vehicle (1) is activated; and/or
- environmental information (40) which indicates the environment of the motor vehicle (1) and is determined in particular taking into account the sensor data (20).

11. Method according to any of claims 8 to 10, in their references to claim 2, wherein the color proportion information limit value (24), the duration limit value (29), the minimum route (34) and/or the minimum duration (35) are selected at least partially depending on the color proportion information (23) for the route (7) having the minimum route length (27), so that the color that was detected for the route (7) already traveled is taken into account, since it can be assumed that typically few local color changes are to be observed with regard to the lane marking (6).

12. Method according to any of the preceding claims, wherein position information which indicates a country in which the motor vehicle (1) is positioned is determined and the preset color is specified depending on the determined position information.

13. Method according to claim 12, wherein a plurality of preset colors are specified depending on the determined position information.

14. Method according to any of the preceding claims, wherein the sensor data (20) in the motor vehicle (1) are determined by means of a sensor device (8), in particular by means of a camera, and/or are received as swarm data (13) provided by another vehicle (5).

15. Motor vehicle (1) which is designed to carry out a method according to any of the preceding claims.

## Revendications

1. Procédé permettant d'autoriser un changement de voie de circulation au moins assisté pour un véhicule automobile (1), dans lequel le procédé présente les étapes suivantes :
- détermination (S1) d'informations de couleur (21) qui décrivent une couleur d'un marquage de voie de circulation (6) d'une voie de circulation (3) sur laquelle le véhicule automobile (1) se déplace en évaluant des données de capteur (20) qui décrivent la couleur du marquage de voie de circulation (6) ;
**caractérisé par**
- la détermination (S2) d'informations de proportion de couleur (23) qui décrivent une proportion d'un tronçon de voie (7) du véhicule automobile (1) dans lequel le marquage de voie de circulation (6) présente une couleur préréglée et/ou une proportion d'un temps de trajet du véhicule automobile (1) dans lequel le marquage de voie de circulation (6) présente la couleur préréglée, dans lequel les informations de proportion de couleur (23) qui décrivent la proportion du tronçon de voie (7) sont déterminées en évaluant des informations de tronçon de voie (22) qui décrivent le tronçon de voie (7) parcouru par le véhicule automobile (1) et en évaluant les informations de couleur (21) déterminées, et les informations de proportion de couleur (23) qui décrivent la proportion du temps de trajet sont déterminées en évaluant des informations de temps de trajet qui décrivent le temps de trajet du véhicule automobile et en évaluant les informations de couleur (21) déterminées ;
- si les informations de proportion de couleur (23) déterminées sont supérieures à une valeur limite d'informations de proportion de couleur (24), la fourniture (S4) d'informations d'autorisation (25) qui décrivent le fait que le changement de voie de circulation au moins assisté est autorisé, et
- si les informations de proportion de couleur (23) déterminées sont inférieures ou égales à la valeur limite d'informations de proportion de couleur (24), la fourniture (S5) d'informations d'interdiction (26) qui décrivent le fait que l'autorisation du changement de voie de circulation au moins assisté est interdite.

2. Procédé selon la revendication 1, dans lequel le tronçon de voie (7) pour lequel les informations de proportion de couleur (23) sont déterminées présente une longueur de tronçon de voie qui est supérieure à une longueur de tronçon de voie minimale (27), et/ou le temps de trajet pour lequel les informations de proportion de couleur (23) sont déterminées présente une durée de temps de trajet qui est supérieure à une durée de temps de trajet minimale.

3. Procédé selon l'une des revendications précédentes, dans lequel on vérifie (S7) si, conformément aux informations de couleur (21) déterminées, un changement de couleur a eu lieu entre la couleur préréglée et une autre couleur différente de celle-ci, et, si le changement de couleur vers l'autre couleur a eu lieu, des informations de durée (28) sont déterminées (S8), lesquelles décrivent pendant quelle durée les informations de couleur (21) décrivent l'autre couleur, dans lequel, si les informations de durée (28) sont inférieures (S9) à une valeur limite de durée (29), on suppose, lors de la détermination des informations de proportion de couleur (23), que le marquage de voie de circulation (6) a présenté la couleur préréglée pendant la durée.

4. Procédé selon l'une des revendications précédentes, dans lequel des informations de nombre de changements de couleur (30) sont déterminées (S10), lesquelles décrivent un nombre de changements de couleur entre la couleur préréglée et une autre couleur différente de celle-ci, et on vérifie (S11) si les informations de nombre de changements de couleur (30) déterminées sont inférieures à une valeur limite de nombre de changements de couleur (31), dans lequel les informations d'autorisation (25) ne sont fournies que si c'est le cas.

5. Procédé selon la revendication 4, dans lequel les informations de nombre de changements de couleur (30) décrivent le nombre de changements de couleur en fonction du temps et/ou en fonction de la distance.

6. Procédé selon l'une des revendications précédentes, dans lequel les informations de couleur (21) déterminées décrivent une teinte (32) de la couleur, la teinte (32) est prise en compte lors de la détermination des informations de proportion de couleur (23) et la valeur limite d'informations de proportion de couleur (24) est prédéfinie en fonction de la teinte (32).

7. Procédé selon l'une des revendications précédentes, dans lequel des informations d'activation de clignotant (33) sont déterminées (S12), lesquelles décrivent le fait qu'un clignotant du véhicule automobile (1) a été activé, dans lequel, pendant que le clignotant est activé conformément aux informations d'activation de clignotant (33) déterminées, on suppose, lors de la détermination des informations de proportion de couleur (23), que le marquage de voie de circulation (6) présente de manière inchangée la couleur qu'il présentait avant l'activation du clignotant conformément aux informations d'activation de clignotant (33).

8. Procédé selon la revendication 7, dans lequel, lorsque le clignotant est à nouveau désactivé, on vérifie (S13) si les informations de couleur (21) déterminées présentent une autre couleur que la couleur préréglée pour un tronçon de voie minimal (34) et/ou une durée minimale (35), dans lequel les informations d'interdiction (26) sont fournies si c'est le cas.

9. Procédé selon la revendication 8 en référence à la revendication 3, dans lequel la valeur limite d'informations de proportion de couleur (24), la valeur limite de durée (29), le tronçon de voie minimal (34) et/ou la durée minimale (35) sont choisis au moins en partie en fonction d'informations de situation (36) qui décrivent une situation actuelle dans laquelle se trouve le véhicule automobile (1).

10. Procédé selon la revendication 9, dans lequel les informations de situation (36) sont déterminées en évaluant au moins l'une des informations suivantes :
- des informations météorologiques (37) qui décrivent la météo, en particulier la pluie, dans un environnement du véhicule automobile (1), dans lequel les informations météorologiques (37) sont déterminées en particulier en tenant compte d'informations d'activation d'essuie-glace qui décrivent une activation d'un essuie-glace, et/ou au moyen d'un capteur de pluie (18) ;
- des informations de luminosité (38) qui décrivent une luminosité de l'environnement du véhicule automobile (1) et qui sont en particulier déterminées au moyen d'un capteur de luminosité (16) ;
- des informations d'état d'éclairage (39) qui décrivent un état d'éclairage d'un dispositif d'éclairage (15) du véhicule automobile (1), en particulier si des feux de route du véhicule automobile (1) sont activés ; et/ou
- des informations d'environnement (40) qui décrivent un environnement du véhicule automobile (1) et qui sont en particulier déterminées en tenant compte des données de capteur (20).

11. Procédé selon l'une des revendications 8 à 10 en référence à la revendication 2, dans lequel la valeur limite d'informations de proportion de couleur (24), la valeur limite de durée (29), le tronçon de voie minimal (34) et/ou la durée minimale (35) sont choisis au moins en partie en fonction des informations de proportion de couleur (23) pour le tronçon de voie (7) avec la longueur de tronçon de voie minimal (27), de sorte que l'on tient compte de la couleur qui a été détectée pour le tronçon de voie (7) déjà parcouru, étant donné qu'il faut partir du principe que l'on observe typiquement peu de changements de couleur locaux en ce qui concerne le marquage de voie de circulation (6).

12. Procédé selon l'une des revendications précédentes, dans lequel des informations de position qui décrivent un pays dans lequel est positionné le véhicule automobile (1) sont déterminées et la couleur préréglée est prédéfinie en fonction des informations de position déterminées.

13. Procédé selon la revendication 12, dans lequel plusieurs couleurs préréglées sont prédéfinies en fonction des informations de position déterminées.

14. Procédé selon l'une des revendications précédentes, dans lequel les données de capteur (20) sont déterminées dans le véhicule automobile (1) au moyen d'un dispositif formant capteur (8), en particulier au moyen d'une caméra, et/ou sont reçues sous la forme de données en essaim (13) qui sont fournies par un autre véhicule (5).

15. Véhicule automobile (1), lequel est configuré pour exécuter un procédé selon l'une des revendications précédentes.
